(19)

**Europäisches Patentamt**
**European Patent Office**
**Office européen des brevets**

(11) **EP 4 644 179 A1**

(12) **EUROPEAN PATENT APPLICATION**
published in accordance with Art. 153(4) EPC

(43) Date of publication:
05.11.2025 Bulletin 2025/45

(21) Application number: 23911515.7

(22) Date of filing: 29.11.2023

(51) International Patent Classification (IPC):
*B60Q 1/04* (2006.01)  *B60Q 1/14* (2006.01)
*F21S 41/143* (2018.01)  *F21S 41/148* (2018.01)
*F21S 41/151* (2018.01)  *F21S 41/657* (2018.01)
*F21S 41/663* (2018.01)  *F21S 41/675* (2018.01)
*F21V 7/00* (2006.01)  *F21V 14/04* (2006.01)
*F21W 102/14* (2018.01)  *F21W 102/16* (2018.01)
*F21W 102/155* (2018.01)  *F21Y 115/10* (2016.01)
*F21Y 115/30* (2016.01)

(52) Cooperative Patent Classification (CPC):
**B60Q 1/04; B60Q 1/14; F21S 41/143; F21S 41/148;**
**F21S 41/151; F21S 41/657; F21S 41/663;**
**F21S 41/675; F21V 7/00; F21V 14/04;**
F21W 2102/14; F21W 2102/155; F21W 2102/16;
F21Y 2115/10; F21Y 2115/30

(86) International application number:
**PCT/JP2023/042703**

(87) International publication number:
**WO 2024/142734 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 28.12.2022 JP 2022212014
28.12.2022 JP 2022212015

(71) Applicant: **Koito Manufacturing Co., Ltd.**
**Tokyo 141-0001 (JP)**

(72) Inventor: **KITO, Masanori**
**Shizuoka-shi, Shizuoka 424-8764 (JP)**

(74) Representative: **Hoffmann Eitle**
**Patent- und Rechtsanwälte PartmbB**
**Arabellastraße 30**
**81925 München (DE)**

(54) **VEHICLE HEADLIGHT**

(57) A vehicle headlight (10) comprises: a cutoff line (CL); a first optical unit (70) that emits light to regions including at least a region below the cutoff line (CL); a second optical unit (80) that can emit light to regions including at least a region above the cutoff line (CL) and that can reduce light to a given region among such regions; and a third optical unit (90) that emits light so as to at least partially overlap the cutoff line (CL). During high-beam emission, the first optical unit (70) and the second optical unit (80) are lit, and during low-beam emission, the first optical unit (70) and the third optical unit (90) are lit.

FIG. 2

EP 4 644 179 A1

## Description

TECHNICAL FIELD

The present disclosure relates to a vehicle headlamp.

BACKGROUND ART

Patent Literature 1 discloses a vehicle lamp capable of obtaining a low beam light distribution pattern that is easily visually recognized while appropriately blurring a light-dark boundary of a cutoff line and preventing the G value from exceeding a statutory standard value.

CITATION LIST

PATENT LITERATURE

Patent Literature 1: JP2008-262755A

SUMMARY OF INVENTION

TECHNICAL PROBLEM

The higher the mounting position of a vehicle headlamp on a vehicle, the closer a cutoff line of a low beam light distribution pattern becomes to a mounting height of a rearview mirror of a preceding vehicle. Therefore, when the mounting position is high, it is preferable to form a low beam light distribution pattern having a sharp cutoff line where the light and dark suddenly change. Therefore, it is difficult to meet the demand for forming an easy-to-see low beam light distribution pattern by blurring the cutoff line as in Patent Literature 1.

An object of the present disclosure is to provide a vehicle headlamp capable of forming a light distribution pattern with good visibility even when a mounting position is high.

SOLUTION TO PROBLEM

A vehicle headlamp according to an aspect of the present disclosure is a vehicle headlamp including:

a first optical unit configured to emit light to a first region including a cutoff line and at least a region below the cutoff line;
a second optical unit configured to emit light to a second region including at least a region above the cutoff line and reduce light to a given region among the second region; and
a third optical unit configured to emit light so as to overlap at least a part of the cutoff line, in which
when forming high beam light distribution pattern, the first optical unit and the second optical unit are turned on, and
when forming low beam light distribution pattern, the first optical unit and the third optical unit are turned on.

According to the above configuration, light is emitted by the third optical unit so as to overlap the cutoff line formed by the first optical unit during the low beam emission, so that the low beam light distribution pattern is formed which is blurred and has good visibility compared to the cutoff line formed by only the first optical unit.

On the other hand, during the high beam emission, a so-called ADB light distribution pattern is emitted, and a sharp cutoff line is formed, but the cutoff line appears only in a region with reduced light, and thus the visibility is hardly deteriorated.

As described above, according to the vehicle headlamp having the above configuration, the blurred cutoff line is formed during the low beam emission, and the visibility is excellent. Further, even if the mounting height to the vehicle becomes high and the mounting height of the rearview mirror of a preceding vehicle becomes close to the height of the cutoff line, when the preceding vehicle is present in the vicinity in front of the vehicle, a so-called ADB light distribution pattern in which the third optical unit is not turned on is emitted, so that no glare is given to the preceding vehicle.

A vehicle headlamp according to an aspect of the present disclosure is

a vehicle headlamp that emits an ADB light distribution pattern and a low beam light distribution pattern, in which

a cutoff line formed when the low beam light distribution pattern is emitted is blurred more than at least a part of a cutoff line formed when the ADB light distribution pattern is emitted.

According to the above configuration, the cutoff line formed when the low beam light distribution pattern is emitted is blurred more than at least a part of the cutoff line formed when the ADB light distribution pattern is emitted. Therefore, when the low beam light distribution pattern is irradiated, a blurred cutoff line is formed, and the visibility is excellent.

ADVANTAGEOUS EFFECTS OF INVENTION

According to the present disclosure, it is possible to provide a vehicle headlamp capable of forming a light distribution pattern with good visibility even when a mounting position is high.

BRIEF DESCRIPTION OF DRAWINGS

[FIG. 1] FIG. 1 is a perspective view of a vehicle equipped with a vehicle headlamp according to an embodiment of the present disclosure (hereinafter, simply referred to as the present embodiment).

[FIG. 2] FIG. 2 is a block diagram of a system configuration including the vehicle headlamp according to a first embodiment.

[FIG. 3] FIG. 3 is a cross-sectional view of the vehicle headlamp according to the first embodiment.

[FIG. 4] FIG. 4 is a diagram illustrating light distribution patterns emitted by the vehicle headlamp in the first embodiment.

[FIG. 5] FIG. 5 is a diagram illustrating a low beam selected light distribution pattern during low beam emission in the first embodiment.

[FIG. 6] FIG. 6 is a diagram illustrating a high beam light distribution pattern during high beam emission in the first embodiment.

[FIG. 7] FIG. 7 is a diagram illustrating a state in which the cutoff line is blurred.

[FIG. 8] FIG. 8 is a diagram illustrating a state in which the cutoff line is blurred.

[FIG. 9] FIG. 9 is a diagram illustrating a low beam selected light distribution pattern during low beam emission in a second modification of the first embodiment.

[FIG. 10] FIG. 10 is a block diagram of a system configuration including a vehicle headlamp according to a second embodiment.

[FIG. 11] FIG. 11 is a cross-sectional view of the vehicle headlamp according to the second embodiment.

[FIG. 12] FIG. 12 is a block diagram of a system configuration including a vehicle headlamp according to the present embodiment.

[FIG. 13] FIG. 13 is a cross-sectional view of the vehicle headlamp according to the present embodiment.

[FIG. 14] FIG. 14 is a diagram illustrating a low beam light distribution pattern during low beam emission.

[FIG. 15] FIG. 15 is a diagram illustrating a high beam light distribution pattern during high beam emission.

[FIG. 16] FIG. 16 is a diagram illustrating a state in which the cutoff line is blurred.

[FIG. 17] FIG. 17 is a diagram illustrating a state in which the cutoff line is blurred.

DESCRIPTION OF EMBODIMENTS

Hereinafter, the present embodiment will be described with reference to the drawings. Dimensions of members illustrated in the drawings may be different from actual dimensions of the members for convenience of description.

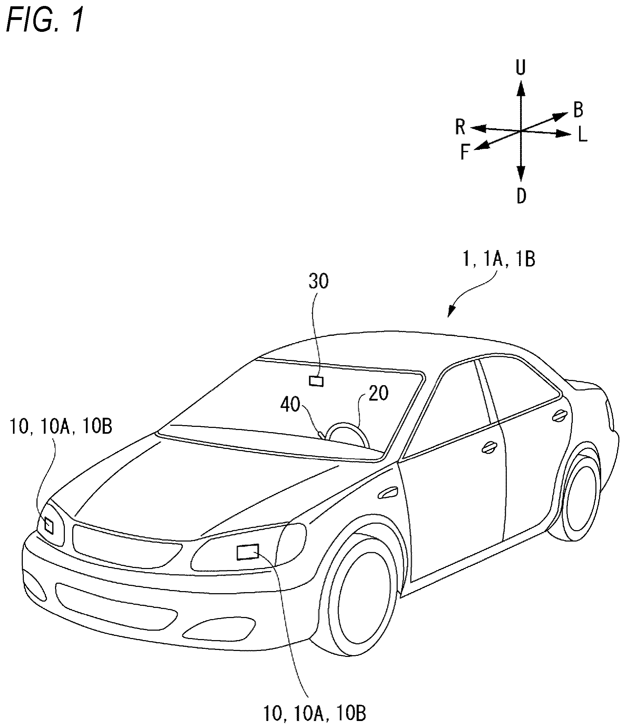

In the description of the present embodiment, a "left-right direction", an "upper-lower direction", and a "front-rear direction" may be appropriately referred to for convenience of description. The directions are relative directions set for a vehicle 1, 1A, 1B illustrated in FIG. 1. Here, the "left-right direction" is a direction including a "left direction" and a "right direction", and is also a vehicle width direction of the vehicle 1, 1A, 1B. The "upper-lower direction" is a direction including an "upper direction" and a "lower direction". The "front-rear direction" is a direction including a "front direction" and a "rear direction". The front-rear direction is a direction orthogonal to the left-right direction and the upper-lower direction. In the drawings, a reference numeral U indicates the upper direction. A reference numeral D indicates the lower direction. A reference numeral F indicates the front direction. A reference numeral B indicates the rear direction. A reference numeral L indicates the left direction. A reference numeral R indicates the right direction.

(First Embodiment)

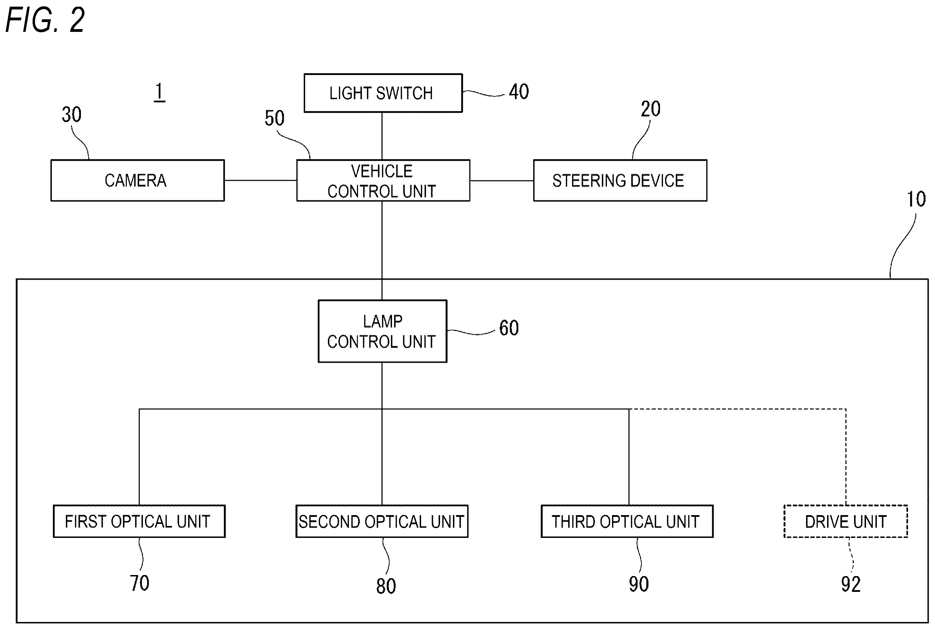

First, a vehicle headlamp 10 according to the present embodiment will be described below with reference to FIGS. 1 to 4. FIG. 1 is a perspective view of a vehicle 1 on which the vehicle headlamp 10 is mounted. FIG. 2 is a block diagram of a system configuration including the vehicle headlamp 10. The vehicle 1 is, for example, a vehicle (an autonomous vehicle) that can travel in a manual driving mode and/or an autonomous driving mode.

As illustrated in FIGS. 1 and 2, the vehicle 1 includes the vehicle headlamps 10, a steering device 20, a camera 30, a light switch 40, and a vehicle control unit 50. As illustrated in FIG. 1, the vehicle headlamps 10 are disposed on a front right side and a front left side of the vehicle 1, respectively. The steering device 20 is provided, for example, inside the vehicle 1. The camera 30 is disposed, for example, near a windshield. The camera 30 is disposed between the vehicle headlamp 10 disposed on the front right side of the vehicle 1 and the vehicle headlamp 10 disposed on the front left side of the vehicle 1 in the vehicle width direction of the vehicle 1 (left-right direction in FIG. 1). The light switch 40 is provided, for example, in the vicinity of the steering device 20.

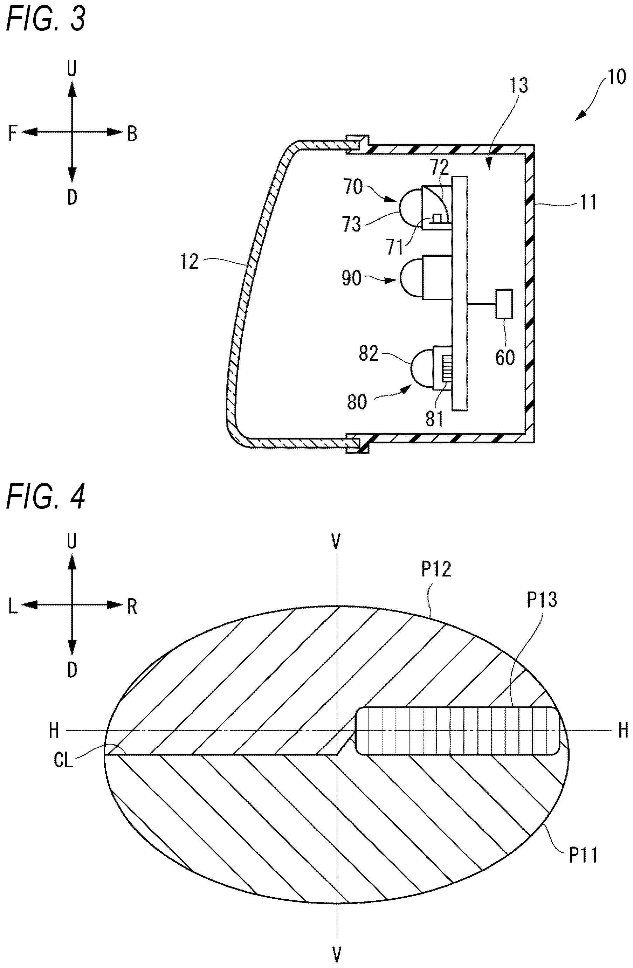

As illustrated in FIG. 2, the vehicle headlamp 10 includes a lamp control unit 60, a first optical unit 70, a second optical unit 80, and a third optical unit 90. As illustrated in FIG. 3, the vehicle headlamp 10 includes a lamp body 11 having an opening in front of the vehicle headlamp 10, and a light-transmitting outer cover 12 that covers the opening of the lamp body 11. Within a lamp chamber 13 formed by the lamp body 11 and the outer cover 12, the lamp control unit 60, the first optical unit 70, the second optical unit 80, and the third optical unit 90 are accommodated.

Returning to FIG. 2, the steering device 20 will be described. The steering device 20 includes, for example, a steering wheel.

The camera 30 is, for example, a camera including an imaging element such as a charge-coupled device (CCD) or a complementary MOS (CMOS). The camera 30 acquires imaging data by capturing images of the surroundings of the vehicle 1 (for example, an area in front of the vehicle 1). The camera 30 outputs the imaging data to the vehicle control unit 50.

The light switch 40 is configured to, for example, switch the vehicle headlamp 10 ON and OFF, and switch a light distribution pattern to be emitted according to an operation by a driver of the vehicle 1. The driver of the vehicle 1 can select whether to turn on low beam or high beam by operating the light switch 40. When the driver of the vehicle 1 operates the light switch 40, the light switch 40 generates a control signal for emitting a light distribution pattern corresponding to the operation, and transmits the signal to the vehicle control unit 50.

The vehicle control unit 50 is configured to control traveling of the vehicle 1. The vehicle control unit 50 is configured to determine the surrounding environment of the vehicle 1 based on surrounding environment information, and transmit a determination result to the lamp control unit 60. The vehicle control unit 50 is implemented by, for example, at least one electronic control unit (ECU). The electronic control unit includes, for example, a computer system including one or more processors and one or more memories, and an electronic circuit including an active element such as a transistor and a passive element.

The vehicle control unit 50 is configured to perform image analysis on the captured imaging data output from the camera 30. The vehicle control unit 50 detects the surrounding environment information indicating the surrounding environment of the vehicle 1 from the imaging data, and transmits the surrounding environment information to the lamp control unit 60. The surrounding environment information includes, for example, position information of an object (an oncoming vehicle, a preceding vehicle, a sign, or the like) located in front of the vehicle 1. The position information is, for example, an angular coordinate that represents the angle of the object as viewed from the vehicle 1.

The vehicle control unit 50 transmits a signal for controlling the vehicle headlamp 10 to the lamp control unit 60 based on the control signal from the light switch 40. For example, when the driver of the vehicle 1 performs an operation on the light switch 40 to emit a low beam light distribution pattern or a low beam selected light distribution pattern described later, the vehicle control unit 50 receives from the light switch 40 a control signal for emitting the low beam light distribution pattern or the low beam selected light distribution pattern, and transmits the control signal to the lamp control unit 60. For example, when the driver of the vehicle 1 performs an operation on the light switch 40 to emit a high beam light distribution pattern (for example, an ADB light distribution pattern), the vehicle control unit 50 receives from the light switch 40 a control signal for emitting the high beam light distribution pattern and transmits the control signal to the lamp control unit 60.

The lamp control unit 60 may have the same hardware configuration as the vehicle control unit 50. The lamp control unit 60 is configured to control the first optical unit 70, the second optical unit 80, and the third optical unit 90 based on the surrounding environment information received from the vehicle control unit 50.

The first optical unit 70 emits light to a region including a cutoff line and at least a region below the cutoff line. As illustrated in FIG. 3, the first optical unit 70 includes, for example, at least one light source 71, a reflector 72, and a projection lens 73. The light source unit 71 is implemented by, for example, a light emitting diode (LED) element or a laser diode (LD) element. The light source 71 emits light toward the reflector 72. The reflector 72 is configured to reflect the light emitted from the light source 71 toward the projection lens 73. The projection lens 73 is, for example, an aspherical lens in which a front surface is a convex surface and a rear surface is a flat surface. The projection lens 73 is formed of a transparent material such as a transparent resin such as acrylic. The projection lens 73 is configured to project the light reflected by the reflector 72 onto a front region of the vehicle 1.

The second optical unit 80 can emit light to a region including at least a region above the cutoff line and reduce light to a given region among the region. In the present specification, the term "reduce light" includes blocking at least a part of the light emitted from the second optical unit 80 and reducing the intensity of the light emitted from the second optical unit 80. The second optical unit 80 can emit, for example, an adaptive driving beam (ADB) light distribution pattern. The ADB light distribution pattern is a light distribution pattern in which a region where an object such as a preceding vehicle or an oncoming vehicle is present is not irradiated with light in the high beam light distribution pattern, and is a light distribution pattern in which a non-irradiation region is changed depending on the presence or absence and the position of the object.

The second optical unit 80 includes a light source 81 and a projection lens 82. The light source 81 includes, for example, a plurality of micro LED light emitting elements. The light emission states of the plurality of micro LED light emitting elements included in the light source 81 can be changed independently of each other. That is, in the vehicle headlamp 10, the lamp control unit 60 can perform ON/OFF control and brightness adjustment for each of the micro LED light emitting elements included in the light source 81. The projection lens 82 may have the same configuration as the projection lens 73, for example.

The third optical unit 90 includes, for example, a light source including an LED array. The LED array is, for example, a light source in which a plurality of micro LED light emitting elements are arranged in an array. The light emission states of the plurality of micro LED light emitting elements included in the third optical unit 90 can be changed independently of each other. In this case, in the vehicle headlamp 10, the lamp control unit 60 can perform ON/OFF control and brightness adjustment for each of the micro LED light emitting elements included in the third optical unit 90.

Here, a first light distribution pattern P11 emitted from the first optical unit 70, a second light distribution pattern P12 emitted from the second optical unit 80, and a third light distribution pattern P13 emitted from the third optical unit 90 will be described with reference to FIG. 4. In the present embodiment, a case where the vehicle 1 is traveling in the right lane will be described. The first light distribution pattern P11, the second light distribution pattern P12, and the third light distribution pattern P13 illustrated in FIG. 4 are shown projected onto a virtual vertical screen at a predetermined position in front of the vehicle 1 (for example, a position 25 m in front of the vehicle 1). Note that the light distribution patterns illustrated in the subsequent drawings are also shown projected onto a virtual vertical screen at a predetermined position in front of the vehicle 1. FIG. 4 illustrates a line V-V indicating a vertical direction (the upper-lower direction in FIG. 4) at the center of an irradiation range of the vehicle headlamp 10, and a line H-H orthogonal to the line V-V and extending in a horizontal direction (the left-right direction in FIG. 4). In addition, the subsequent drawings illustrating the light distribution patterns also illustrates the line V-V indicating the vertical direction at the center of the irradiation range of the vehicle headlamp 10 and the line H-H orthogonal to the line V-V and extending in the horizontal direction.

As illustrated in FIG. 4, the first light distribution pattern P11 is a so-called low beam light distribution pattern. The first light distribution pattern P11 has a cutoff line CL. The first light distribution pattern P11 is emitted by the first optical unit 70 onto a region including the cutoff line and a region below the cutoff line CL (a part hatched with diagonal lines slanting downward to the right in FIG. 4).

The second light distribution pattern P12, together with the first light distribution pattern P11, forms a so-called high beam light distribution pattern. The second light distribution pattern P12 is emitted by the second optical unit 80 onto a region including at least a region above the cutoff line CL (a part hatched with diagonal lines slanting upward to the right in FIG. 4). In the present embodiment, the second optical unit 80 irradiates an ADB light distribution pattern. Therefore, any region in the second light distribution pattern P12 can be reduced in light.

The third light distribution pattern P13 is emitted by the third optical unit 90 so as to overlap at least a part of the cutoff line CL of the first light distribution pattern P11 (a part hatched with vertical lines in FIG. 4).

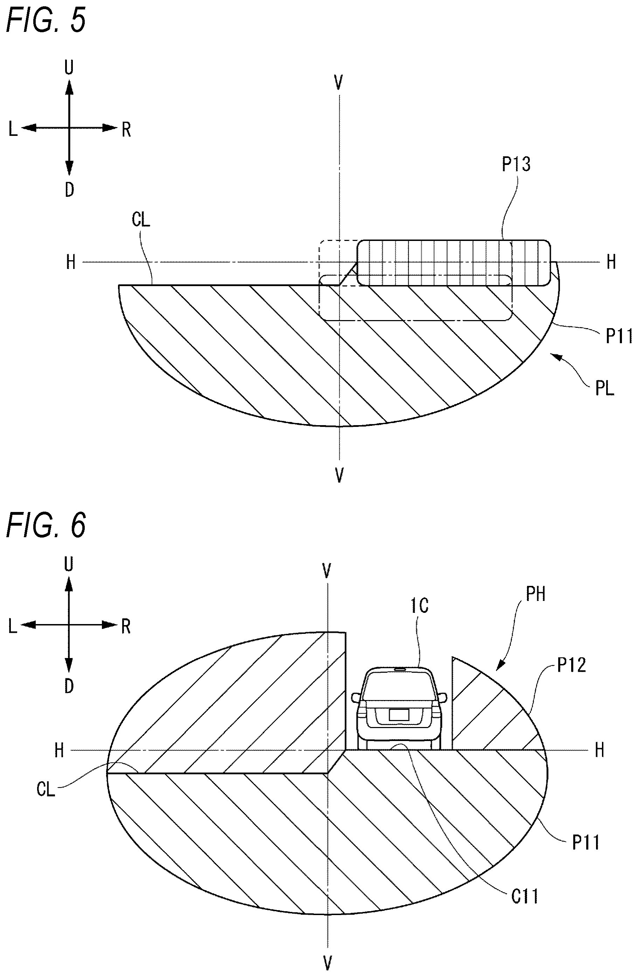

Next, with reference to FIGS. 5 and 6, a low beam selected light distribution pattern PL emitted from the vehicle headlamp 10 during low beam emission and a high beam light distribution pattern PH emitted from the vehicle headlamp 10 during high beam emission will be described. The low beam emission refers to a time when the driver of the vehicle 1 performs an operation on the light switch 40 to emit the low beam selected light distribution pattern PL. The high beam emission refers to a time when the driver of the vehicle 1 performs an operation on the light switch 40 to emit the high beam light distribution pattern PH. FIG. 5 is a diagram illustrating the light distribution pattern PL during the low beam emission. FIG. 6 is a diagram illustrating the light distribution pattern PH during the high beam emission. The high beam light distribution pattern PH emitted in the present embodiment is an ADB light distribution pattern.

As illustrated in FIG. 5, during the low beam emission, the vehicle headlamp 10 turns on the first optical unit 70 and the third optical unit 90 to emit the low beam selected light distribution pattern PL including the first light distribution pattern P11 and the third light distribution pattern P13. That is, the low beam selected light distribution pattern PL in the present embodiment includes the third light distribution pattern P13, and the third light distribution pattern P13 is emitted so as to overlap a right part of the cutoff line CL (a part of the cutoff line CL where the height of the cutoff line CL is higher). Therefore, a region in which the first light distribution pattern P11 and the third light distribution pattern P13 are emitted in an overlapping manner is brighter than a region in which only the first light distribution pattern P11 is emitted and the third light distribution pattern P13 is not emitted. As described above, the cutoff line of the low beam selected light distribution pattern PL has brightness that changes in two stages. If counting from a region where no light is emitted, it can be said that the cutoff line of the low beam selected light distribution pattern PL has brightness that changes in three stages.

As illustrated in FIG. 6, during the high beam emission, the vehicle headlamp 10 turns on the first optical unit 70 and the second optical unit 80 to emit the high beam light distribution pattern PH including the first light distribution pattern P11 and the second light distribution pattern P12.

In the example illustrated in FIG. 6, since a preceding vehicle 1C is present in front of the vehicle 1, the camera 30 outputs imaging data regarding the preceding vehicle 1C to the vehicle control unit 50. The vehicle control unit 50 detects the surrounding environment information including the position information of the preceding vehicle 1C from the imaging data received from the camera 30, and transmits the surrounding environment information to the lamp control unit 60. The lamp control unit 60 controls the second optical unit 80 based on the surrounding environment information received from the vehicle control unit 50, so that light is not emitted toward the preceding vehicle 1C. Therefore, in the example illustrated in FIG. 6, light to a surrounding region of the preceding vehicle 1C is blocked. Therefore, during the high beam emission, light to the surrounding region of the preceding vehicle 1C is blocked, and the third light distribution pattern P13 is not emitted. Therefore, a part C11 of the cutoff line CL located below the preceding vehicle 1C has a clear light-dark difference. That is, the cutoff line CL is formed by a region irradiated with the first light distribution pattern P11 and a region not irradiated with the first light distribution pattern P11, and the brightness does not change in two stages in the vicinity of the cutoff line CL. If counting from a region where no light is emitted, the cutoff line of the high beam light distribution pattern PH has brightness that changes only in two stages. Therefore, the cutoff line CL formed when the low beam selected light distribution pattern PL is emitted appears blurrier than at least a part (the part C11 in the present embodiment) of the cutoff line CL formed when the high beam light distribution pattern PH (ADB light distribution pattern) is emitted. A general low beam light distribution pattern is formed by blocking a part of light, and therefore, the light-dark difference in the cutoff line is usually clear. The cutoff line of a general low beam light distribution pattern does not change in brightness in two stages. Therefore, the cutoff line of the low beam selected light distribution pattern PL is blurred as compared with the cutoff line of a general low beam light distribution pattern.

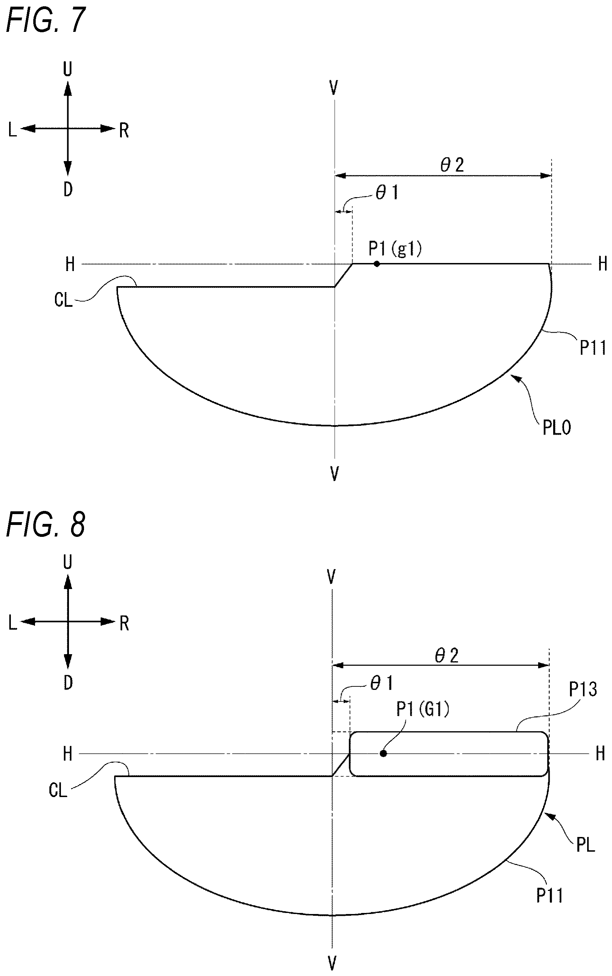

A degree of blurring of the cutoff line CL can be expressed by a brightness gradient. Therefore, in the present embodiment, the degree of blurring of each cutoff line will be described in detail with reference to FIGS. 7 and 8 showing light distribution patterns having cutoff lines with different degrees of blurring. FIG. 7 is a diagram illustrating a brightness gradient g1 in the cutoff line CL of a low beam light distribution pattern PL0 in the related art. A position P1 in FIG. 7 is a reference position for measuring the brightness gradient. The position P1 is any position that is on the line H-H, and is within a range from an angle θ1 to the right to an angle θ2 to the left from a front face of the vehicle headlamp in the horizontal direction. The brightness gradient g1 at the position P1 is calculated using the following equation (1). E(a) represents illuminance at the position P1. E(a + 0.1) represents illuminance at a position above the position P1 by a vertical angular position of 0.1 degrees.

$$g1 = \log E(a) - \log E(a + 0.1) \qquad \text{Equation (1)}$$

Next, a brightness gradient G1 in the cutoff line CL of the low beam selected light distribution pattern PL according to the present embodiment will be described with reference to FIG. 8. The position P1 in FIG. 8 is the same position as the position P1 in FIG. 7. The brightness gradient G1 at the position P1 is calculated using the following equation (2).

$$G1 = \log E(a) - \log E(a + 0.1) \qquad \text{Equation (2)}$$

As illustrated in FIG. 7, the low beam light distribution pattern PL0 in the related art does not include the third light distribution pattern P13. On the other hand, as illustrated in FIG. 8, the low beam selected light distribution pattern PL according to the present embodiment includes the third light distribution pattern P13. Therefore, the brightness gradient G1 is smaller than the brightness gradient g1. The smaller the brightness gradient, the smaller the light-dark difference of the cutoff line CL. Therefore, the cutoff line CL of the low beam selected light distribution pattern PL according to the present embodiment is visually perceived as being blurrier than the cutoff line CL of the low beam light distribution pattern PL0 in the related art.

Incidentally, the higher the mounting position of a vehicle headlamp on a vehicle, the closer a cutoff line of a low beam light distribution pattern becomes to a mounting height of a rearview mirror of a preceding vehicle. Therefore, when the mounting position is high, it is preferable to form a low beam light distribution pattern having a sharp cutoff line where the light and dark suddenly change. However, when attempting to form a low beam light distribution pattern having a sharp cutoff line where the light and dark suddenly change at the cutoff line, it is difficult to meet the demand for forming an easy-to-see low beam light distribution pattern by blurring the cutoff line.

According to the vehicle headlamp 10 having the above configuration, light is emitted by the third optical unit 90 so as to overlap the cutoff line CL formed by the first optical unit 70 during the low beam emission, so that the low beam selected light distribution pattern PL is formed which is blurred and has good visibility compared to the cutoff line CL formed by only the first optical unit 70. On the other hand, during the high beam emission, a so-called ADB light distribution pattern is emitted, and a sharp cutoff line CL is formed, but the cutoff line CL appears only in a region with reduced light, and thus the visibility is hardly deteriorated. As described above, according to the vehicle headlamp 10, the blurred cutoff line CL is formed during the low beam emission, and the visibility is excellent. Further, even if the mounting height to the vehicle 1 becomes high and the mounting height of the rearview mirror of the preceding vehicle 1C becomes close to the height of the cutoff line CL, when the preceding vehicle 1C is present in the vicinity in front of the vehicle 1, a so-called ADB light distribution pattern is emitted, so that no glare is given to the preceding vehicle 1C.

Further, according to the vehicle headlamp 10 having the above configuration, the cutoff line CL formed when the first optical unit 70 and the third optical unit 90 are turned on is blurred more than the cutoff line CL formed when only the first optical unit 70 is turned on. Therefore, according to the vehicle headlamp 10, it is possible to emit a light distribution pattern that is less unnatural.

(First Modification of First Embodiment)

Next, a first modification of the first embodiment will be described with reference to FIGS. 2 and 5. In the modification, the same portions as those in the first embodiment are described using the same reference numerals, and description of repeated portions is omitted as appropriate. As indicated by a dashed line in FIG. 2, the modification is different from the first embodiment in that the vehicle headlamp 10 includes a drive unit 92. In the present modification, the vehicle 1 is also assumed to be traveling in the right lane.

The drive unit 92 may be, for example, a swivel actuator controlled by the lamp control unit 60. The drive unit 92 includes, for example, a stepping motor. The drive unit 92 can adjust an angle of the optical axis of the third optical unit 90 in the vehicle width direction (left-right direction in FIG. 1) by driving the stepping motor. In this way, the drive unit 92 can displace the orientation of the third optical unit 90 in the horizontal direction (left-right direction in FIG. 1). That is, the drive unit 92 can move the irradiation region of the third optical unit 90 in the horizontal direction. The drive unit 92 may be a leveling actuator controlled by the lamp control unit 60. In this case, the drive unit 92 includes, for example, a motor as a drive source and a screw that rotates by being driven by the motor. The screw provided in the drive unit 92 is screwed into the third optical unit 90, for example. When the drive unit 92 is driven, the third optical unit 90 is tilted in the upper-lower direction. In this way, the drive unit 92 can displace the orientation of the third optical unit 90 in the vertical direction (upper-lower direction in FIG. 1). That is, in this case, the drive unit 92 can move the irradiation region of the third optical unit 90 in the vertical direction. The drive unit 92 may include a swivel actuator and a leveling actuator. The drive unit 92 may be configured integrally with the third optical unit 90 so as to drive only the light source of the third optical unit 90, or may be configured separately from the third optical unit 90 so as to drive the entire third optical unit 90 including the light source.

Here, a case where the irradiation region of the third optical unit 90 is moved leftward will be described with reference to FIG. 5. The drive unit 92 includes a swivel actuator and a leveling actuator. The lamp control unit 60 transmits to the drive unit 92 a control signal for moving the irradiation region of the third optical unit 90 leftward (an example of the horizontal direction) based on a control signal received from the vehicle control unit 50, for example. The drive unit 92 moves the irradiation region of the third optical unit 90 leftward by adjusting the angle of the optical axis of the third optical unit 90 based on the control signal from the lamp control unit 60. As a result, as indicated by a dashed line in FIG. 5, the third light distribution pattern P13 moves leftward.

Next, a case where the irradiation region of the third optical unit 90 is moved downward will be described. The lamp control unit 60 transmits to the drive unit 92 a control signal for moving the irradiation region of the third optical unit 90 downward (an example of the vertical direction) based on a control signal received from the vehicle control unit 50, for example. The drive unit 92 moves the irradiation region of the third optical unit 90 downward by tilting the third optical unit 90 downward based on the control signal from the lamp control unit 60. As a result, as indicated by a one-dot chain line in FIG. 5, the third light distribution pattern P13 moves downward from the position of the dashed line in FIG. 5. As described above, in the third optical unit 90 according to the modification, the irradiation region of light can be changed in the horizontal direction and/or the vertical direction.

The high beam light distribution pattern during the high beam emission in the modification is the same as the high beam light distribution pattern during the high beam emission in the first embodiment, that is, the high beam light distribution pattern PH illustrated in FIG. 6.

The vehicle headlamp 10 according to the modification also exhibits the same effects as those of the vehicle headlamp 10 according to the first embodiment.

Further, according to the vehicle headlamp 10 having the above configuration, the light irradiation region of the third optical unit 90 can be changed according to the situation, so that the vehicle headlamp 10 can emit an appropriate low beam selected light distribution pattern PL suited to the situation.

Further, according to the vehicle headlamp 10 having the above configuration, the vehicle headlamp 10 includes the drive unit 92 that moves the irradiation region of the third optical unit 90 in the horizontal direction or the vertical direction, so that the light irradiation region can be accurately changed.

(Second Modification of First Embodiment)

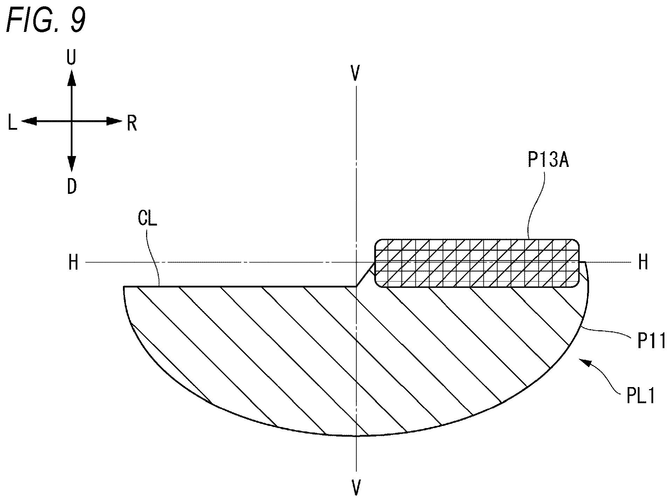

Next, a second modification of the first embodiment will be described with reference to FIG. 9. In the modification, the same portions as those in the first embodiment are described using the same reference numerals, and description of repeated portions is omitted as appropriate. In the modification, the third optical unit 90 includes an LED array, but the other configurations are the same as those of the first embodiment. In the present modification, the vehicle 1 is also assumed to be traveling in the right lane.

First, a low beam selected light distribution pattern PL1 during the low beam emission in the present embodiment will be described with reference to FIG. 9. When the driver of the vehicle 1 performs an operation on the light switch 40 to emit the low beam selected light distribution pattern PL1, the vehicle headlamp 10 emits the low beam selected light distribution pattern PL1 including the first light distribution pattern P11 (a part hatched with diagonal lines slanting downward to the right in FIG. 9) and a third light distribution pattern P13A (a part hatched with diagonal lines slanting upward to the right in FIG. 9). Specifically, during the low beam emission, the vehicle headlamp 10 turns on the first optical unit 70 and the third optical unit 90 to project the low beam selected light distribution pattern PL1 illustrated in FIG. 9 on a virtual vertical screen at a predetermined position in front of the vehicle 1.

The third optical unit 90 is implemented by an LED array. Therefore, as illustrated in FIG. 9, the third light distribution pattern P13A included in the low beam selected light distribution pattern PL1 is divided into a plurality of regions, any of which can change an illumination state independently of one another. Therefore, the light irradiation region of the third optical unit 90 can be changed.

The high beam light distribution pattern PH during the high beam emission in the modification is the same as the high beam light distribution pattern during the high beam emission in the first embodiment, that is, the high beam light distribution pattern PH illustrated in FIG. 6.

The vehicle headlamp 10 according to the modification also exhibits the same effects as those of the vehicle headlamp 10 according to the first embodiment.

Further, according to the vehicle headlamp 10 having the above configuration, the light irradiation region of the third optical unit 90 can be changed according to the situation, so that the vehicle headlamp 10 can emit an appropriate low beam selected light distribution pattern PL suited to the situation.

Further, according to the vehicle headlamp 10 having the above configuration, the irradiation region of the third optical unit 90 is divided into a plurality of regions, any of which can change an illumination state independently of one another. Therefore, the irradiation region of the third optical unit 90 can be precisely changed.

Further, according to the vehicle headlamp 10 having the above configuration, the third optical unit 90 is implemented by the LED array. Therefore, the illumination state of the plurality of regions in the irradiation region of the third optical unit 90 can be accurately changed.

(Second Embodiment)

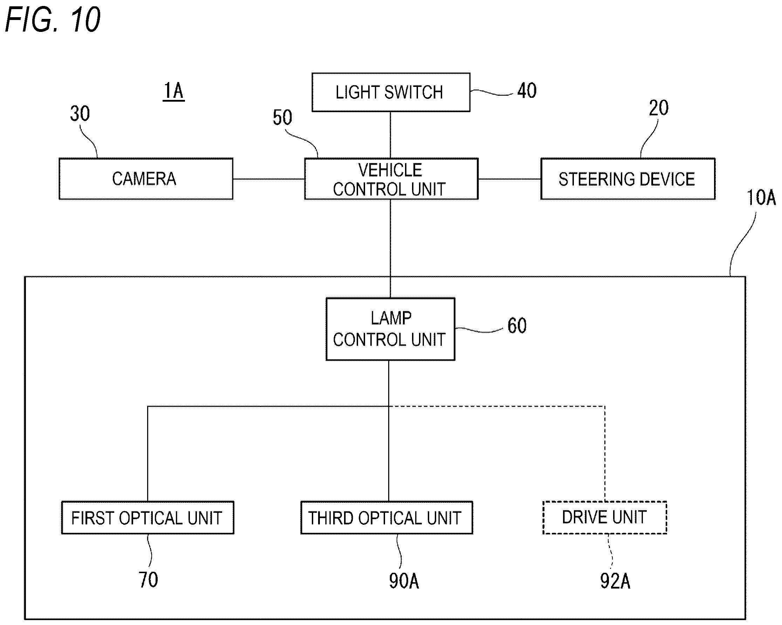

Next, a second embodiment will be described with reference to FIGS. 4, 10, and 11. In the present embodiment, the same portions as those of the first embodiment or the modifications of the first embodiment are described using the same reference numerals, and description of repeated portions is omitted as appropriate. As illustrated in FIG. 10, a vehicle 1A according to the present embodiment is different from the vehicle 1 according to the first embodiment in that a vehicle headlamp 10A is provided instead of the vehicle headlamp 10. In the present embodiment, the vehicle 1A is also assumed to be traveling in the right lane.

As illustrated in FIG. 10, the vehicle headlamp 10A includes the lamp control unit 60, the first optical unit 70, and a third optical unit 90A. The third optical unit 90A according to the present embodiment has the function of the second optical unit 80 according to the first embodiment and the function of the third optical unit 90 according to the first embodiment. That is, in the present embodiment, the second optical unit 80 according to the first embodiment and the third optical unit 90 according to the first embodiment are integrated as a common optical unit (third optical unit 90A).

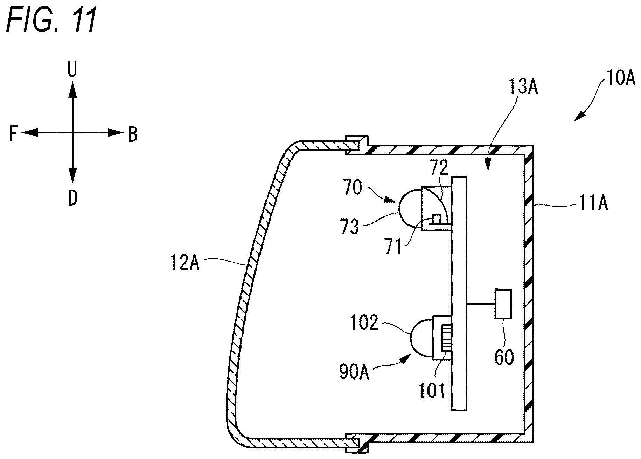

As illustrated in FIG. 11, the vehicle headlamp 10A includes a lamp body 11A having an opening in front of the vehicle headlamp 10A, and a light-transmitting outer cover 12A that covers the opening of the lamp body 11A. Within a lamp chamber 13A formed by the lamp body 11A and the outer cover 12A, the lamp control unit 60, the first optical unit 70, and the third optical unit 90A are accommodated.

The third optical unit 90A includes a light source 101 and a projection lens 102. The light source 101 can be implemented by, for example, an LED array including a plurality of micro LED light emitting elements. When the light source 101 is implemented by an LED array, the light emission states of the plurality of micro LED light emitting elements included in the light source 101 can be changed independently of one another. That is, in this case, in the vehicle headlamp 10A, the lamp control unit 60 can perform ON/OFF control and brightness adjustment for each of the micro LED light emitting elements included in the light source 101.

The projection lens 102 may have the same configuration as the projection lens 73, for example.

The third optical unit 90A can emit the second light distribution pattern P12 and the third light distribution pattern P13 illustrated in FIG. 4.

The low beam selected light distribution pattern during the low beam emission in the present embodiment is the same as the low beam selected light distribution pattern during the low beam emission in the first embodiment or each modification of the first embodiment, that is, the low beam selected light distribution pattern PL or PL1 illustrated in FIG. 5 or FIG. 9.

The high beam light distribution pattern during the high beam emission in the present embodiment is the same as the high beam light distribution pattern during the high beam emission in the first embodiment, that is, the high beam light distribution pattern PH illustrated in FIG. 6.

The vehicle headlamp 10A according to the present embodiment also exhibits the same effects as those of the vehicle headlamp 10 according to the first embodiment and the second modification of the first embodiment.

Further, according to the vehicle headlamp 10A having the above-described configuration, the second optical unit 80 according to the first embodiment and the third optical unit 90 according to the first embodiment are integrated as a common optical unit (third optical unit 90A). The second optical unit 80 is turned on during the high beam emission, and is therefore functionally similar to the third optical unit 90 that emits light so as to overlap at least a part of the cutoff line CL, and the second optical unit 80 and the third optical unit 90 can be easily made common. Further, according to the vehicle headlamp 10A, the second optical unit 80 according to the first embodiment and the third optical unit 90 according to the first embodiment can be configured as a common optical unit, so that the number of components can be reduced.

(Third Embodiment)

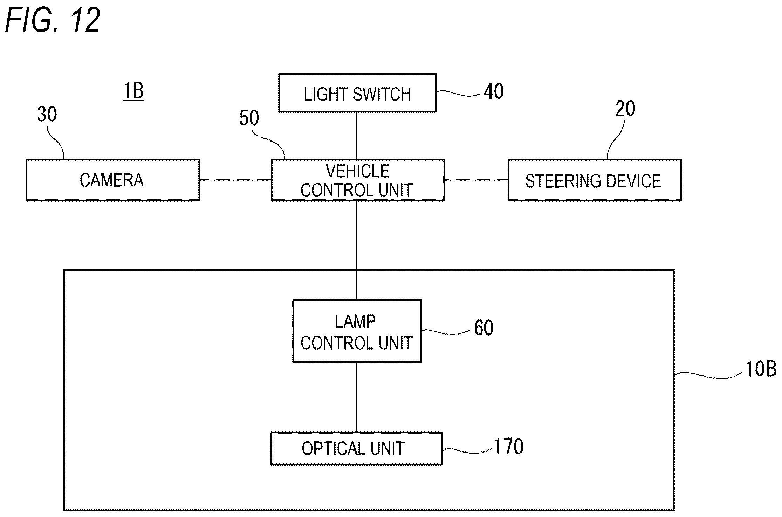

Next, a third embodiment will be described with reference to FIG. 1 and FIGS. 12 to 17. In the present embodiment, the same portions as those of the first embodiment, each modification of the first embodiment, or the second embodiment are described using the same reference numerals, and description of repeated portions is omitted as appropriate. As illustrated in FIG. 12, a vehicle 1B according to the present embodiment is different from the vehicle 1 according to the first embodiment in that a vehicle headlamp 10B is provided instead of the vehicle headlamp 10. In the present embodiment, the vehicle 1B is also assumed to be traveling in the right lane.

As illustrated in FIGS. 1 and 12, the vehicle 1B includes the vehicle headlamps 10B, the steering device 20, the camera 30, the light switch 40, and the vehicle control unit 50. As illustrated in FIG. 1, the vehicle headlamps 10B are disposed on a front right side and a front left side of the vehicle 1B, respectively.

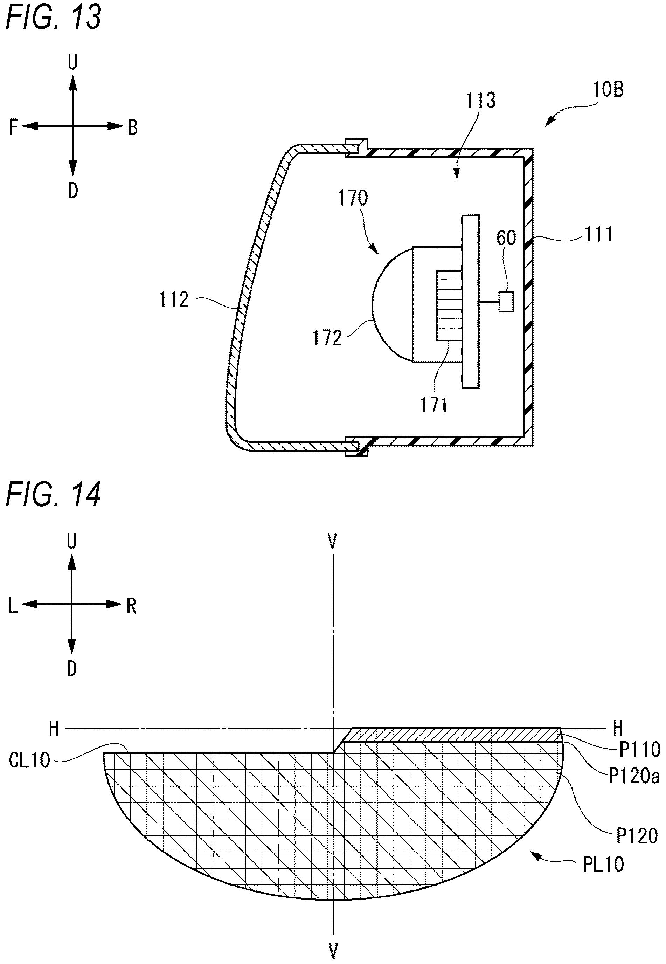

As illustrated in FIG. 12, the vehicle headlamp 10B includes the lamp control unit 60 and an optical unit 170. As illustrated in FIG. 13, the vehicle headlamp 10B includes a lamp body 111 having an opening in front of the vehicle headlamp 10B, and a light-transmitting outer cover 112 that covers the opening of the lamp body 111. The lamp control unit 60 and the optical unit 170 are accommodated in a lamp chamber 113 formed by the lamp body 111 and the outer cover 112.

In the present embodiment, for example, when the driver of the vehicle 1 performs an operation on the light switch 40 to emit a low beam light distribution pattern, the vehicle control unit 50 receives from the light switch 40 a control signal for emitting the low beam light distribution pattern and transmits the control signal to the lamp control unit 60. For example, when the driver of the vehicle 1 performs an operation on the light switch 40 to emit a high beam light distribution pattern (for example, an ADB light distribution pattern), the vehicle control unit 50 receives from the light switch 40 a control signal for emitting the high beam light distribution pattern and transmits the control signal to the lamp control unit 60.

In the present embodiment, the lamp control unit 60 is configured to control the optical unit 170 based on the surrounding environment information received from the vehicle control unit 50.

The optical unit 170 can emit an ADB light distribution pattern and a low beam light distribution pattern. The ADB light distribution pattern is a light distribution pattern in which a region where an object such as a preceding vehicle or an oncoming vehicle is present is not irradiated with light in the high beam light distribution pattern, and is a light distribution pattern in which a non-irradiation region is changed depending on the presence or absence and the position of the object. As illustrated in FIG. 13, the optical unit 170 includes a light source 171 and a projection lens 172. Note that, the light distribution pattern in which a region where an object such as a preceding vehicle or an oncoming vehicle is present is not irradiated with light in the high beam light distribution pattern includes a pattern in which no light is emitted onto a target region, and a pattern in which reduced light is emitted onto a target region.

The light source 171 is implemented by, for example, an LED array including a plurality of micro LED light emitting elements. The LED array is, for example, a light source in which a plurality of micro LED light emitting elements are arranged in an array. The light emission states of the plurality of micro LED light emitting elements included in the optical unit 170 can be changed independently of each other. Therefore, in the vehicle headlamp 10B, the lamp control unit 60 can perform ON/OFF control and brightness adjustment for each of the micro LED light emitting elements included in the optical unit 170. That is, the optical unit 170 can reduce the light of any region. In the present specification, the term "reduce light" includes blocking at least a part of the light emitted from the optical unit 170 and reducing the intensity of the light emitted from the optical unit 170. The light source 171 emits light toward the projection lens 172.

The projection lens 172 is, for example, an aspherical lens in which a front surface is a convex surface and a rear surface is a flat surface. The projection lens 172 is formed of a transparent material such as a transparent resin such as acrylic. The projection lens 172 is configured to project the light emitted from the light source 171 onto a front region of the vehicle 1B.

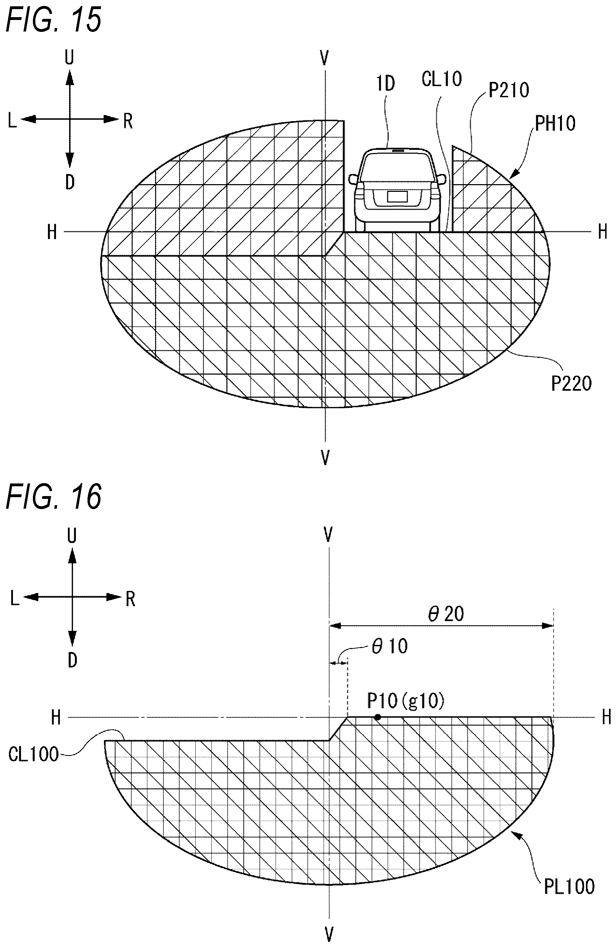

Next, with reference to FIGS. 14 and 15, a low beam light distribution pattern PL10 emitted from the vehicle headlamp 10B during the low beam emission and a high beam light distribution pattern PH10 emitted from the vehicle headlamp 10B during high beam emission will be described. In the present embodiment, a case where the vehicle 1B is traveling in the right lane will be described. The low beam emission refers to a time when the driver of the vehicle 1B performs an operation on the light switch 40 to emit the low beam light distribution pattern PL10. The high beam emission refers to a time when the driver of the vehicle 1B performs an operation on the light switch 40 to emit the high beam light distribution pattern PH10. The high beam light distribution pattern PH10 emitted in the present embodiment is an ADB light distribution pattern. In FIGS. 14 and 15, hatching is changed for each region having different brightness. That is, the brightness of the regions with the same hatching is the same, but the brightness of the regions with different hatching is different.

FIG. 14 is a diagram illustrating the light distribution pattern PL10 projected on a virtual vertical screen at a predetermined position in front of the vehicle 1B (for example, a position 25 m in front of the vehicle 1B) during the low beam emission. FIG. 15 is a diagram illustrating the light distribution pattern PH10 projected on a virtual vertical screen at a predetermined position in front of the vehicle 1B (for example, a position 25 m in front of the vehicle 1B) during the high beam emission.

First, the low beam light distribution pattern PL10 during the low beam emission in the present embodiment will be described with reference to FIG. 14. When the driver of the vehicle 1B operates the light switch 40 to emit the low beam light distribution pattern PL10, the optical unit 170 emits the low beam light distribution pattern PL 10. In this case, the low beam light distribution pattern PL 10 illustrated in FIG. 14 is projected onto a virtual vertical screen at a predetermined position in front of the vehicle 1B.

As illustrated in FIG. 14, the low beam light distribution pattern PL10 is divided into a plurality of irradiation regions. In FIG. 14, a first portion P110 is indicated by hatching with diagonal lines slanting upward to the right, and a second portion P120 is indicated by hatching with diagonal lines slanting downward to the right.

The first portion P110 is a region of the low beam light distribution pattern PL 10 that is located above an elbow point of a cutoff line CL 10, among the plurality of divided irradiation regions. In the illustrated example, among the regions of the low beam light distribution pattern PL 10 located above the elbow point of the cutoff line CL10, an uppermost region is defined as the first portion P110.

The second portion P120 is the portion below the first portion P110. The brightness of an upper edge region P120a of the second portion P120 is higher than the brightness of the first region P110. In the present embodiment, the second portion P120 has the same brightness throughout.

The first portion P110 is darker than the upper edge region P120a of the second portion P120. Therefore, when attention is paid to the vicinity of the cutoff line CL 10 of the low beam light distribution pattern PL 10, the upper edge region P120a of the bright second portion P120, the first portion P110 darker than the region P120a, and a region where no light is emitted are arranged from bottom to top, and the brightness changes in three stages and gradually becomes dark.

Next, the high beam light distribution pattern PH10 during the high beam emission in the present embodiment will be described with reference to FIG. 15. When the driver of the vehicle 1B operates the light switch 40 to emit the high beam light distribution pattern PH10, the optical unit 170 emits the high beam light distribution pattern PH10. In this case, the high beam light distribution pattern PH10 illustrated in FIG. 15 is projected onto a virtual vertical screen at a predetermined position in front of the vehicle 1B.

The high beam light distribution pattern PH10 is divided into a plurality of irradiation regions. As described above, during both the low beam emission and the high beam emission, the irradiation region of the optical unit 170 is divided into a plurality of regions, any of which can change an illumination state independently of one another. That is, the optical unit 170 can irradiate with light an irradiation region including a plurality of regions, any of which can change an illumination state independently of one another.

In the present embodiment, the high beam light distribution pattern PH10 is divided into a region P210 above the cutoff line CL 10 and a region P220 below the cutoff line CL 10. In FIG. 15, the region P210 is shown as a region hatched with diagonal lines slanting upward to the right, and the region P220 is shown as a region hatched with diagonal lines slanting downward to the right. In the region P210, the region where light is blocked or reduced changes according to the presence or absence and the position of a preceding vehicle or an oncoming vehicle. On the other hand, in the region P220, the illumination state does not change even if the presence or absence and the position of a preceding vehicle or an oncoming vehicle change. Both the region P210 and the region P220 are illuminated with uniform brightness. The brightness of the region P220 is equal to that of the region P120 of the low beam light distribution pattern PL 10 described with reference to FIG. 14.

In the example illustrated in FIG. 15, since a preceding vehicle 1D is present in front of the vehicle 1, the camera 30 outputs imaging data regarding the preceding vehicle 1D to the vehicle control unit 50. The vehicle control unit 50 detects the surrounding environment information including the position information of the preceding vehicle 1D from the imaging data received from the camera 30, and transmits the surrounding environment information to the lamp control unit 60. The lamp control unit 60 controls the optical unit 170 to form the region P210 based on the surrounding environment information received from the vehicle control unit 50, so that light is not emitted toward the preceding vehicle 1D. The lamp control unit 60 forms the region P220 regardless of the surrounding environment information. Therefore, in the example shown in FIG. 15, the high beam light distribution pattern PH10 in which light to the surrounding region of the preceding vehicle 1D is blocked is formed.

As illustrated in FIG. 15, when the high beam light distribution pattern PH10 is emitted, a part of the cutoff line CL 10 appears as the contour of a lower edge of the region with the light blocked. The cutoff line CL10 is formed by an upper edge of the region P220. Since the region P220 is irradiated with uniform brightness, the brightness changes above and below the cutoff line CL 10 in two stages, from bright to dark, from bottom to top. That is, the cutoff line CL 10 of the low beam light distribution pattern PL 10 shown in FIG. 14 becomes darker in three stages from bottom to top, while the cutoff line CL 10 of the high beam light distribution pattern PH10 shown in FIG. 15 becomes darker in two stages from bottom to top. As described above, in the vehicle headlamp 10B according to the present embodiment, the cutoff line CL 10 formed when the low beam light distribution pattern PL 10 is emitted is blurred more than at least a part of the cutoff line CL 10 formed when the ADB light distribution pattern PH10 is emitted.

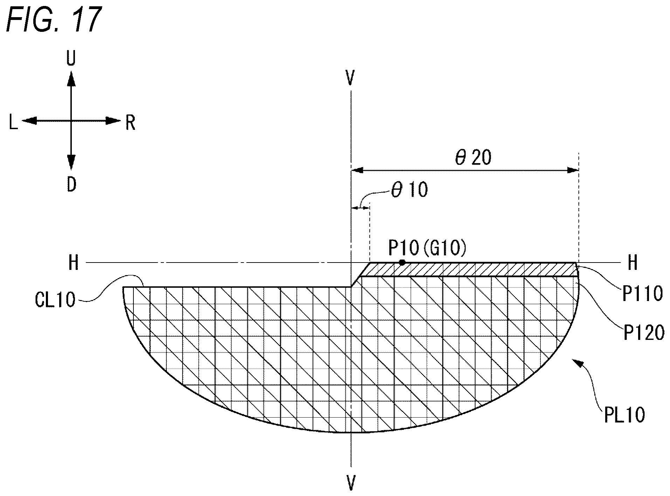

A degree of blurring of the cutoff line CL 10 can be expressed by a brightness gradient. Therefore, in the present embodiment, the degree of blurring of each cutoff line will be described in detail with reference to FIGS. 16 and 17 showing light distribution patterns having cutoff lines with different degrees of blurring. FIG. 16 is a diagram illustrating a brightness gradient g10 in the cutoff line CL 100 of a low beam light distribution pattern PL 100 having uniform brightness. The low beam light distribution pattern PL 100 illustrated in FIG. 16 is different from the low beam light distribution pattern PL 10 illustrated in FIG. 14. In order to indicate that the brightness of each region of the low beam light distribution pattern PL 100 is the same, the entire low beam light distribution pattern PL 100 is hatched in the same manner in FIG. 16. A position P10 in FIG. 16 is a reference position for measuring the brightness gradient. The position P10 is any position that is on the line H-H, and is within a range from an angle θ10 to the right to an angle θ20 to the left from a front face of the vehicle headlamp in the horizontal direction. The brightness gradient g10 at the position P10 is calculated using the following equation (3). E(b) represents illuminance at the position P10. E(b + 0.1) represents illuminance at a position above the position P10 by a vertical angular position of 0.1 degrees. In the example illustrated in FIG. 16, the low beam light distribution pattern PL 100 is emitted to the position P10, and no light is emitted to a position 0.1 degrees above the position P10.

$$g10 = logE(b) - logE(b + 0.1) \quad \text{Equation (3)}$$

Next, a brightness gradient G10 in the cutoff line CL 10 of the low beam light distribution pattern PL10 in which the first portion P110 is darker than the second portion P120 will be described with reference to FIG. 17. FIG. 17 shows the low beam light distribution pattern PL10 shown in FIG. 14. In FIG. 17, in order to indicate that the brightness of the first portion P110 is different from the brightness of the second portion P120, the first portion P110 and the second portion P120 are hatched differently. The brightness of the second portion P120 is the same as the brightness of the low beam light distribution pattern PL 100 shown in FIG. 16. The position P10 in FIG. 17 is the same position as the position P10 in FIG. 16. The brightness gradient G10 at the position P10 is calculated using the following equation (4).

$$G10 = logE(b) - logE(b + 0.1) \quad \text{Equation (4)}$$

In FIG. 17, the position P10 is included in the first portion P110. The first portion P110 is darker than the second portion P120. A region above the first portion P110 by 0.1 degrees is a region not irradiated with light, and thus the region is darker than the first portion P110 and the second portion P120. Therefore, the region above the first portion P110, the first portion P110, and the second portion P120 become darker in this order.

As described above, at the position P10, the brightness gradient g10 in FIG. 16 indicates a degree of change from the brightness of the low beam light distribution pattern PL 100 to a state where no light is emitted, while the brightness gradient G10 in FIG. 17 indicates a degree of change from the brightness of the first portion P 110 darker than the low beam light distribution pattern PL 100 to a state where no light is emitted. That is, the brightness gradient G10 is smaller than the brightness gradient g10. The smaller the brightness gradient, the smaller the light-dark difference of the cutoff line CL 10. Therefore, the light-dark difference on the right side of the cutoff line CL10 in the example shown in FIG. 17 is smaller than the light-dark difference of the cutoff line CL 10 in the example shown in FIG. 16. Therefore, the cutoff line CL 10 in the example shown in FIG. 16 is sharp, while the right side of the cutoff line CL 10 in the example shown in FIG. 17 is blurred.

As described above, whether or not "the cutoff line formed when the low beam light distribution pattern is emitted is blurred more than at least a part of the cutoff line formed when the ADB light distribution pattern is emitted" referred to in the present disclosure can be determined by comparing the brightness gradients at positions near the cutoff line for each of the low beam light distribution pattern and the ADB light distribution pattern, using the above-described equations (3) and (4).

According to the vehicle headlamp 10B having the above configuration, the cutoff line CL 10 formed when the low beam light distribution pattern PL 10 is emitted is blurred more than a part of the cutoff line CL 10 formed when the high beam light distribution pattern PH10 (ADB light distribution pattern) is emitted. Therefore, when the low beam light distribution pattern PL 10 is emitted, a blurred cutoff line CL 10 is formed, and the visibility is excellent. Further, even if the mounting height to the vehicle 1B becomes high and the mounting height of the rearview mirror of the preceding vehicle 1D becomes close to the height of the cutoff line CL 10, when the preceding vehicle 1D is present, an ADB light distribution pattern is emitted, so that no glare is given to the preceding vehicle 1D.

In addition, according to the vehicle headlamp 10B having the above-described configuration, the optical unit 170 irradiates with light an irradiation region including a plurality of regions, any of which can change an illumination state independently of one another. Therefore, according to the vehicle headlamp 10B, the low beam light distribution pattern PL 10 and the high beam light distribution pattern PH10 (ADB light distribution pattern) can be precisely changed.

Further, the vehicle headlamp 10B according to the above configuration includes the single optical unit 170, so that the number of components can be reduced.

Further, according to the vehicle headlamp 10B having the above configuration, the optical unit 170 is implemented by the LED array. Therefore, the illumination state of the plurality of regions in the irradiation region of the optical unit 170 can be accurately changed.

Further, according to the vehicle headlamp 10B having the above configuration, the low beam light distribution pattern PL10 and the high beam light distribution pattern PH10 (ADB light distribution pattern) are formed to be divided into a plurality of irradiation regions. Therefore, according to the vehicle headlamp 10B, the low beam light distribution pattern PL 10 and the high beam light distribution pattern PH10 can be precisely changed.

Although the embodiments of the present disclosure have been described above, it is needless to say that the technical scope of the present disclosure should not be limited to the description of the present embodiment. The present embodiment is merely an example, and it will be obvious to those skilled in the art that various embodiments can be changed within the scope of the disclosure described in the claims. The technical scope of the present disclosure is determined based on the scope of the disclosure described in the claims and the equivalent scope thereof.

In the above embodiments, the case where the vehicle 1, 1A, 1B is traveling in the right lane has been described, but the present disclosure can also be applied to a case where the vehicle 1, 1A, 1B is traveling in the left lane.

In the above embodiments, the case where the preceding vehicle 1C, 1D is in front of the vehicle 1, 1A, 1B has been described, but the present disclosure can also be applied to a case where an oncoming vehicle is in front of the vehicle 1, 1A, 1B.

In the first embodiment, the modifications of the first embodiment, and the second embodiment, the vehicle headlamp 10, 10A may include a single optical unit capable of achieving the function of the first optical unit 70, the function of the second optical unit 80, and the function of the third optical unit 90. In this case, since the first optical unit 70, the second optical unit 80, and the third optical unit 90 are implemented by a common optical unit, the number of components can be reduced.

In the first embodiment, the modifications of the first embodiment, and the second embodiment, the vehicle headlamp 10, 10A may include the second optical unit 80 and an optical unit capable of achieving the function of the first optical unit 70 and the function of the third optical unit 90. The vehicle headlamp 10, 10A may include the third optical unit 90 and an optical unit capable of achieving the function of the first optical unit 70 and the function of the second optical unit 80. In these cases, the number of components can be reduced.

In the above embodiments, the first optical unit 70, the second optical unit 80, the third optical unit 90, 90A, and the optical unit 170 may be implemented by, for example, at least one light source, a drive mirror, and an optical system including a lens or a mirror. The drive mirror may include, for example, a micro electro mechanical systems (MEMS) mirror, a digital mirror device (DMD), or a rotation blade mirror.

In the first embodiment, the modifications of the first embodiment, and the second embodiment, the third light distribution pattern P13 overlaps a part of the cutoff line CL. Alternatively, the third light distribution pattern P13 may overlap the entire cutoff line CL.

In the above embodiments, the lamp control unit 60 is provided in the vehicle headlamp 10, 10A, 10B. Alternatively, the lamp control unit 60 may be provided in the vehicle 1, 1A, 1B instead of the vehicle headlamp 10, 10A, 10B. In other words, the lamp control unit 60 may be integrated into the vehicle control unit 50.

In the above embodiments, the camera 30 is provided in the vehicle 1, 1A, 1B. Alternatively, the camera 30 may be provided in the vehicle headlamp 10, 10A, 10B instead of the vehicle 1, 1A, 1B.

In the second embodiment, the third optical unit 90A may include a drive unit 92A as indicated by the dashed line in FIG. 10. The drive unit 92A may have, for example, the same configuration as the drive unit 92. When the drive unit 92A is, for example, a swivel actuator controlled by the lamp control unit 60, the drive unit 92A can displace the orientation of the third optical unit 90A in the horizontal direction (left-right direction in FIG. 1). When the drive unit 92A is, for example, a leveling actuator controlled by the lamp control unit 60, the drive unit 92A can displace the orientation of the third optical unit 90A in the vertical direction (upper-lower direction in FIG. 1). The drive unit 92A may include a swivel actuator and a leveling actuator. In this way, the drive unit 92A can move the irradiation region of the third optical unit 90A in the horizontal direction and/or the vertical direction, so that the third optical unit 90A can change the light irradiation region in the horizontal direction and/or the vertical direction by the drive unit 92A.

In the third embodiment, the vehicle headlamp 10B includes a single optical unit 170. Alternatively, the vehicle headlamp 10B may include a plurality of optical units.

In the third embodiment, the cutoff line CL 10 formed when the low beam light distribution pattern PL 10 is emitted is blurred more than a part of the cutoff line CL 10 formed when the high beam light distribution pattern PH10 is emitted, and may be blurred more than the cutoff line CL10 formed when the high beam light distribution pattern PH10 is emitted.

In the third embodiment, the second portion P120 of the low beam light distribution pattern PL10 has uniform brightness in the entire region. Alternatively, the second portion P120 may be brightest at the elbow point and become darker away from the elbow point.

The present application is based on Japanese Patent Application No. 2022-212014 filed on December 28, 2022 and Japanese Patent Application No. 2022-212015 filed on December 28, 2022, and the contents are incorporated herein by reference.

As described above, the following matters are disclosed in the present specification.

(1) A vehicle headlamp including:

a first optical unit configured to emit light to a region including a cutoff line and at least a region below the cutoff line; a second optical unit configured to emit light to a region including at least a region above the cutoff line and reduce light to a given region among the region; and a third optical unit configured to emit light so as to overlap at least a part of the cutoff line, in which during high beam emission, the first optical unit and the second optical unit are turned on, and during low beam emission, the first optical unit and the third optical unit are turned on.

(2) In the vehicle headlamp according to (1), the cutoff line formed when the first optical unit and the third optical unit are turned on is blurred more than the cutoff line formed when only the first optical unit is turned on.

(3) In the vehicle headlamp according to (1) or (2), an irradiation region of light of the third optical unit is changeable.

(4) The vehicle headlamp according to (3) further includes a drive unit configured to move the irradiation region of the third optical unit in a horizontal direction or a vertical direction.

(5) In the vehicle headlamp according to (3), the irradiation region of the third optical unit is divided into a plurality of regions, any of which changes an illumination state independently of one another.

(6) In the vehicle headlamp according to (5), the third optical unit includes an LED array.

(7) In the vehicle headlamp according to any one of (1) to (6), at least two of the first optical unit, the second optical unit, and the third optical unit are implemented by a common optical unit.

(8) In the vehicle headlamp according to (7), the second optical unit and the third optical unit are implemented by a common optical unit.

(9) A vehicle headlamp that emits an ADB light distribution pattern and a low beam light distribution pattern, in which a cutoff line formed when the low beam light distribution pattern is emitted is blurred more than at least a part of a cutoff line formed when the ADB light distribution pattern is emitted.

(10) The vehicle headlamp according to (9) includes an optical unit configured to emit light to an irradiation region including a plurality of regions, any of which changes an illumination state independently of one another.

(11) In the vehicle headlamp according to (10), the vehicle headlamp includes a single optical unit.

(12) In the vehicle headlamp according to (10) or (11), the optical unit includes an LED array.

(13) In the vehicle headlamp according to any one of (9) to (12), the low beam light distribution pattern and the ADB light distribution pattern are formed by a plurality of irradiation regions obtained by dividing.

**Claims**

1. A vehicle headlamp comprising:

a first optical unit configured to emit light to a first region including a cutoff line and at least a region below the cutoff line; a second optical unit configured to emit light to a second region including at least a region above the cutoff line and reduce light to a given region among the second region; and a third optical unit configured to emit light so as to overlap at least a part of the cutoff line, wherein when forming high beam light distribution pattern, the first optical unit and the second optical unit are turned on, and wherein when forming low beam light distribution pattern, the first optical unit and the third optical unit are turned on.

2. The vehicle headlamp according to claim 1, wherein the cutoff line formed when the first optical unit and the third optical unit are turned on is blurred more than the cutoff line formed when only the first optical unit is turned on.

3. The vehicle headlamp according to claim 1 or 2, wherein an irradiation region of light of the third optical unit is changeable.

4. The vehicle headlamp according to claim 3, further comprising: a drive unit configured to move the irradiation region of the third optical unit in a horizontal direction or a vertical direction.

5. The vehicle headlamp according to claim 3, wherein the irradiation region of the third optical unit is divided into a plurality of regions, any of which changes a light emission state independently of one another.

6. The vehicle headlamp according to claim 5, wherein the third optical unit includes an LED array.

7. The vehicle headlamp according to claim 1 or 2, wherein at least two of the first optical unit, the second optical unit, and the third optical unit are implemented by a common optical unit.

8. The vehicle headlamp according to claim 7, wherein the second optical unit and the third optical unit are implemented by a common optical unit.

9. A vehicle headlamp that emits an ADB light distribution pattern and a low beam light distribution pattern, wherein
a cutoff line formed when the low beam light distribution pattern is emitted is blurred more than at least a part of a cutoff line formed when the ADB light distribution pattern is emitted.

10. The vehicle headlamp according to claim 9, comprising:
an optical unit configured to emit light to an irradiation region including a plurality of regions, any of which changes an illumination state independently of one another.

11. The vehicle headlamp according to claim 10, wherein the vehicle headlamp includes a single optical unit.

12. The vehicle headlamp according to claim 10 or 11, wherein the optical unit includes an LED array.

13. The vehicle headlamp according to claim 9 or 10, wherein the low beam light distribution pattern and the ADB light distribution pattern are formed by a plurality of irradiation regions obtained by dividing.

FIG. 1

FIG. 2

LIGHT SWITCH — 40

1

30

50

20

CAMERA — VEHICLE CONTROL UNIT — STEERING DEVICE

10

LAMP CONTROL UNIT — 60

FIRST OPTICAL UNIT | SECOND OPTICAL UNIT | THIRD OPTICAL UNIT | DRIVE UNIT

70 | 80 | 90 | 92

EP 4 644 179 A1

*FIG. 3*

*FIG. 4*

*FIG. 5*

*FIG. 6*

*FIG. 7*

*FIG. 8*

## FIG. 9

*FIG. 10*

EP 4 644 179 A1

FIG. 11

*FIG. 12*

EP 4 644 179 A1

## FIG. 13

U
F ← → B
D

113    10B

170

112    60    111

172

171

## FIG. 14

U
L ← → R
D

V

H    H
CL10    P110
P120a

P120

PL10

V

## FIG. 15

U
L R
D

1D CL10 P210 PH10

V
H H

P220

V

## FIG. 16

U
L R
D

V

θ20

θ10

P10 (g10)

H H

CL100

PL100

V

*FIG. 17*

## INTERNATIONAL SEARCH REPORT

International application No.

**PCT/JP2023/042703**

### A. CLASSIFICATION OF SUBJECT MATTER

*B60Q 1/04*(2006.01)i; *B60Q 1/14*(2006.01)i; *F21S 41/143*(2018.01)i; *F21S 41/148*(2018.01)i; *F21S 41/151*(2018.01)i; *F21S 41/657*(2018.01)i; *F21S 41/663*(2018.01)i; *F21S 41/675*(2018.01)i; *F21V 7/00*(2006.01)i; *F21V 14/04*(2006.01)i; *F21W 102/14*(2018.01)n; *F21W 102/16*(2018.01)n; *F21W 102/155*(2018.01)n; *F21Y 115/10*(2016.01)n; *F21Y 115/30*(2016.01)n

FI: B60Q1/04 E; F21S41/148; F21S41/143; F21S41/151; F21S41/663; F21S41/657; F21V7/00 590; F21V14/04; F21S41/675; B60Q1/14 A; F21Y115:10; F21Y115:30; F21W102:155; F21W102:16; F21W102:14

According to International Patent Classification (IPC) or to both national classification and IPC

### B. FIELDS SEARCHED

Minimum documentation searched (classification system followed by classification symbols)

B60Q1/04; B60Q1/14; F21S41/143; F21S41/148; F21S41/151; F21S41/657; F21S41/663; F21S41/675; F21V7/00; F21V14/04; F21W102/14; F21W102/16; F21W102/155; F21Y115/10; F21Y115/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-189416 A (SUBARU CORP) 22 December 2022 (2022-12-22) paragraphs [0013]-[0040], fig. 1-5 | 1-8 |
| X | | 9-13 |
| Y | JP 2014-229509 A (KOITO MANUFACTURING CO., LTD.) 08 December 2014 (2014-12-08) paragraphs [0013]-[0042], fig. 1-8 | 1-8 |
| A | | 9-13 |
| Y | JP 2013-131372 A (KOITO MANUFACTURING CO., LTD.) 04 July 2013 (2013-07-04) paragraphs [0014]-[0064], fig. 1-5 | 3-6 |
| A | | 1-2, 7-13 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2023/042703**

| Box No. III | Observations where unity of invention is lacking (Continuation of item 3 of first sheet) |
|---|---|

This International Searching Authority found multiple inventions in this international application, as follows:

Document 1: JP 2022-189416 A (SUBARU CORP) 22 December 2022 (2022-12-22) paragraphs [0013]-[0040], fig. 1-5 & US 2022/0397253 A1, paragraphs [0012]-[0046], fig. 1-5

(Invention 1) Claims 1-8

Claims 1-8 have the special technical feature of a "vehicle headlight comprising: a cut-off line; a first optical unit that emits light to regions including at least a region below the cutoff line; a second optical unit that emits light to regions including at least a region above the cut-off line and can sense the light in any of the regions; and a third optical unit that emits light so that the light overlaps at least a portion of the cut-off line," and thus claims 1-8 are classified as invention 1.

(Invention 2) Claims 9-13

Claims 9-13 share, with claim 1 classified as invention 1, have the common technical feature of a vehicle headlight that can emit an ADB light distribution pattern and a low beam light distribution pattern. However, said technical feature does not make a contribution over the prior art in light of the disclosure of document 1, and thus cannot be considered a special technical feature.

Also, there are no other same or corresponding special technical features between these inventions.

Also, claims 9-13 are not dependent on claim 1. In addition, claims 9-13 are not substantially identical to or similarly closely related to any of the claims classified as invention 1.

Therefore, claims 9-13 cannot be classified as invention 1.

Also, claims 9-13 have the special technical feature in which "the cut-off line formed when the low beam light distribution pattern is emitted is more blurred than at least portion of the cut-off line formed when the ADB light distribution pattern is emitted" and are thus classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

| Patent document cited in search report | | | Publication date (day/month/year) | Patent family member(s) | Publication date (day/month/year) |
|---|---|---|---|---|---|
| JP | 2022-189416 | A | 22 December 2022 | US 2022/0397253 A1 paragraphs [0012]-[0046], fig. 1-5 | |
| JP | 2014-229509 | A | 08 December 2014 | (Family: none) | |
| JP | 2013-131372 | A | 04 July 2013 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008262755 A
- JP 2022212014 A
- JP 2022212015 A